# EUROPEAN PATENT SPECIFICATION

(11) **EP 0 273 717 B1**
(45) Date of publication and mention of the grant of the patent: **17.02.1993**
(21) Application number: 87311393.0
(22) Date of filing: 23.12.1987
(51) Int. Cl.: G03B 3/10, G03B 29/00

(54) **Method and apparatus for noncontact automatic focusing**
Verfahren und Vorrichtung zur berührungslosen automatischen Fokussierung
Procédé et appareil pour mise en point automatique sans contact

(30) Priority: 25.12.1986 JP 308029/86
(43) Date of publication of application: 06.07.1988
(73) Proprietor: Mitaka Kohki Co., Limited, Mitaka-shi Tokyo (JP)
(72) Inventor: Nakamura, Katushige, Hachioji-shi Tokyo (JP)
(74) Representative: Gold, Tibor Z.

(56) References cited:
- EP-A- 0 206 840
- DE-A- 3 404 900
- US-A- 4 079 248
- US-A- 4 422 168
- US-A- 4 530 600
- US-A- 4 611 912

## Description

The present invention relates to a method and apparatus for non-contact automatic focusing with a polarized He-Ne laser beam utilized as the measuring beam.

It is a technically difficult problem to achieve optical focusing, in a non-contacting manner, for objects varying in size, shape, and physical property. However, because of the fact that there are a great many uses for non-contact focusing techniques, it is a subject of study by many researchers.

Focusing techniques generally practiced hitherto include an image processing technique making use of a computer. Such an image processing technique, however, has difficulties in that it requires a large-scale apparatus and is slow in focusing because of the image scanning which has to be executed therein. Therefore, such a technique is not considered practical.

In DE-A-3 404 900, there is disclosed an optical system for determining the position of an object by reflecting light from a source towards an objective lens in a direction which is non-parallel to the optical axis of the lens. The lens focuses the light at a point, and photo-detectors provide a difference signal indicating whether reflection by an object occurs at a location closer to or further from the lens than this point.

A non-contact automatic focusing apparatus was also proposed in Japanese Published Patent Application No. 62-75411 to overcome the above difficulties.

However, various objects may still be difficult to detect optically including a transparent substance, an opaque object with such a transparent substance disposed in its vicinity and an object, which is very small in size and shape.

Accordingly, the present invention aims to provide such method and apparatus for non-contact automatic focusing that are improved over those previously proposed and capable of handling various objects as aforementioned accurately and positively.

In accordance with a first aspect of the present invention, there is provided a method for non-contact automatic focusing comprising the steps of:
- reflecting a polarized He-Ne laser beam emitted in a direction parallel to an optical axis of an optical system by means of a mirror which is movable in a direction parallel to the optical axis and which has an angle of inclination of 45 degrees with respect to the optical axis;
- reflecting the laser beam, reflected from said movable mirror, by means of a fixed mirror, which has an angle of inclination of 45 degrees with respect to the optical axis, the distance between the beam reflected by said fixed mirror and the optical axis being adjusted in accordance with the horizontal position of said movable mirror;
- illuminating an object with the laser beam reflected from said fixed mirror and then re-directed by an objective lens, which defines said optical axis, said mirrors being positioned and the laser beam being sufficiently narrow that the laser beam impinges on a local off-axis portion of said objective lens, and the angle of incidence of the laser beam with respect to the object being determined by the distance between the laser beam reflected by said fixed mirror and the optical axis;
- receiving the laser beam reflected by the object and then re-directed again by said objective lens by means of a light position detector; and
- adjusting the distance between said object and objective lens by focusing means in response to a position signal output from said light position detector such that the laser beam impinges on a predetermined location of the object.

In accordance with a second aspect of the present invention there is provided a non-contact automatic focusing apparatus comprising a laser source, an optical system, and focusing means, wherein said laser source emits a polarized He-Ne laser beam in a direction parallel to the optical axis of said optical system, said optical system comprising:
- a mirror movable parallel to the optical axis for reflecting the beam emitted from said laser source in a direction at a right angle to the optical axis;
- a fixed mirror for reflecting the laser beam reflected from said movable mirror in a direction parallel to the optical axis, the distance between the beam reflected by the fixed mirror and the optical axis being adjustable in accordance with the horizontal position of said movable mirror;
- an objective lens defining said optical axis for re-directing said laser beam to an object at an angle of incidence determined by the distance between the laser beam reflected from said fixed mirror and the optical axis and for re-directing again the laser beam reflected from the objects, said mirrors being positioned and said laser beam being sufficiently narrow that the laser beam impinges only on a local off-axis portion of said objective lens;
- a focusing lens for re-directing the laser beam reflected from the object and re-directed by the objective lens to a position located on the optical axis; and
- a light position detector for receiving the laser beam passed through said focusing lens, said focusing means comprising means for moving at least one of the object and the objective lens such that the laser beam impinges on a predetermined location of the object.

The present invention will be described further, by way of example, with reference to the accompanying drawings, in which:-
Fig. 1 is a schematic explanatory diagram showing the basic arrangement of a first embodiment of the present invention;
Fig. 2 is a schematic explanatory diagram of the arrangement in Fig. 1 showing the state of an object shifted toward the optical system;
Fig. 3 is a schematic explanatory diagram of the arrangement in Fig. 1 showing the state of the object shifted away from the optical system;
Figs. 4 and 5 are enlarged explanatory views showing a second embodiment of the present invention;
Figs. 6 and 7 are enlarged explanatory views showing a third embodiment of the present invention;
Figs. 8 and 9 are enlarged explanatory views showing a fourth embodiment of the present invention;
Fig. 10 is an enlarged view showing the portion indicated by an arrow X in Fig. 9;
Fig. 11 is an enlarged view corresponding to Fig. 10 showing an opaque substance in an in-focus state, and
Figs. 12 to 14 are enlarged explanatory views showing a fifth embodiment of the present invention.

Preferred embodiments of the present invention will be described below with reference to the accompanying drawings.

### First Embodiment:

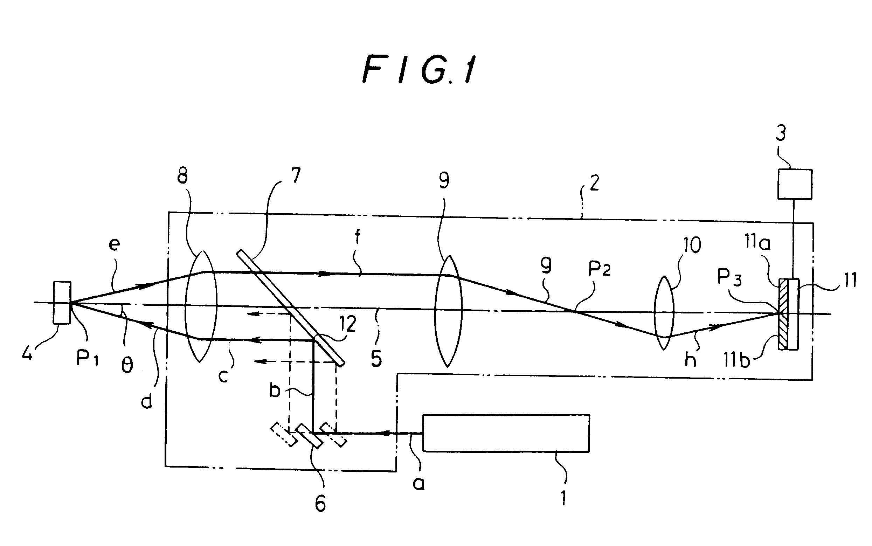

The basic arrangement of a noncontact automatic focusing apparatus according to the present invention will first be described based upon a first embodiment as shown in Figs. 1 to 3. Referring to the drawings, reference numeral 1 denotes a laser source, 2 (the portion enclosed by a two-dot chain line in the drawings) denotes an optical system, 3 denotes a focusing mechanism, and 4 denotes an object.

The laser source 1 emits a polarized He-Ne laser beam as a measuring beam **a** in parallel with the optical axis 5 of the optical system 2 to be described later.

The optical system 2 includes a movable mirror 6, fixed mirror 7, objective lens 8, focusing lens 9, magnifying lens 10, and a light position detector 11. The movable mirror 6 is adapted to move in parallel with the optical axis 5 and to cause the measuring beam **a** emitted from the laser source 1 to be reflected in a perpendicular direction, as a measuring beam **b.** The fixed mirror 7 is formed of a half mirror and is adapted to cause the measuring beam **b** reflected by the movable mirror 6 to be reflected again in a direction turned through 90°, so that it becomes a measuring beam **c** parallel to the optical axis 5. The point of reflection 12 on the fixed mirror 7 is changeable according to the position of the movable mirror 6, and the measuring beam **c** is movable toward or away from the optical axis 5 according to the change in the point of reflection 12 on the fixed mirror 7.

The measuring beam **c** reflected from the fixed mirror 7 then becomes a measuring beam **d** as a result of refraction by the objective lens 8 and impinges on the object 4 where the focusing point p1 coincides with the front surface 4a. The angle of incidence ϑ of the measuring beam **d** on the object 4 is determined dependent upon the distance between the measuring beam **c** and the optical axis 5. That is, where the measuring beam **c** reflected by the fixed mirror 7 is remote from the optical axis 5, the measuring beam **c** is refracted at a position closer to the periphery of the objective lens 8 and is therefore caused to impinge on the object 4 at a larger angle of incidence ϑ . Conversely, where the measuring beam **c** is closer to the optical axis 5, the measuring beam **c** is refracted at a position closer to the centre of the objective lens 8 and is therefore caused to impinge on the object 4 at a smaller angle of incidence ϑ .

A measuring beam **e** reflected from the front surface 4a of the object 4 at an angle of reflection of the same magnitude as the angle of incidence ϑ is refracted again by the objective lens 8 becoming a measuring beam **f** parallel with the optical axis 5. The measuring beam **f** is further refracted by the focusing lens 9 becoming a measuring beam **g** passing through a refocusing point p2 on the optical axis 5 to the magnifying lens 10. The measuring beam **g** is refracted by the magnifying lens 10 and becomes a measuring beam **h,** which is received by split-in-two photosensors 11a, 11b of the light position detector 11.

The light position detector 11 is a semiconductor position-sensitive detector (PSD). The semiconductor position-sensitive detector (PSD) provides a position signal containing positional information for an incident beam without the need for any scanning of an image and has higher resolution and a higher sampling grade than such solid state imaging elements as CCD and MOS. The light position detector 11 is electrically connected with the focusing mechanism 3, whereby a position signal indicating which of the photosensors 11a, 11b in the light position detector 11 has received the measuring beam **h** is delivered to the focusing mechanism 3. The photosensor 11a transmits a signal to the focusing mechanism 3 to shorten the distance between the object 4 and the objective lens 8, the photosensor 11b transmits a position signal to the same to lengthen the distance.

The focusing mechanism 3 employed here is a "servo mechanism" having a very high operating speed for driving a motor by means of a servo circuit. The focusing mechanism 3 is coupled with the object 4 such that the distance between the object 4 and the objective lens 8 is adjusted according to the position signal from the light position detector 11 and the focusing point p1 of the measuring beam **d** coincides with the front surface 4a of the object 4. Incidentally, in the focusing mechanism 3, it is also possible to arrange for the objective lens 8 (or the optical system 2 as a whole) to be moved or both the object 4 and the objective lens 8 (or the optical system 2 as a whole) to be moved.

### In-Focus State (Refer to Fig. 1)

The In-focus state is that in which the focusing point p1 of the measuring beam **d** is coincident with the front surface 4a of the object 4. In this state, the measuring beam **h** reflected from the object 4 is received at the neutral position p3 between the photosensors 11a, 11b,, i.e., at the balanced position, so that the focusing mechanism 3 is rendered inactive.

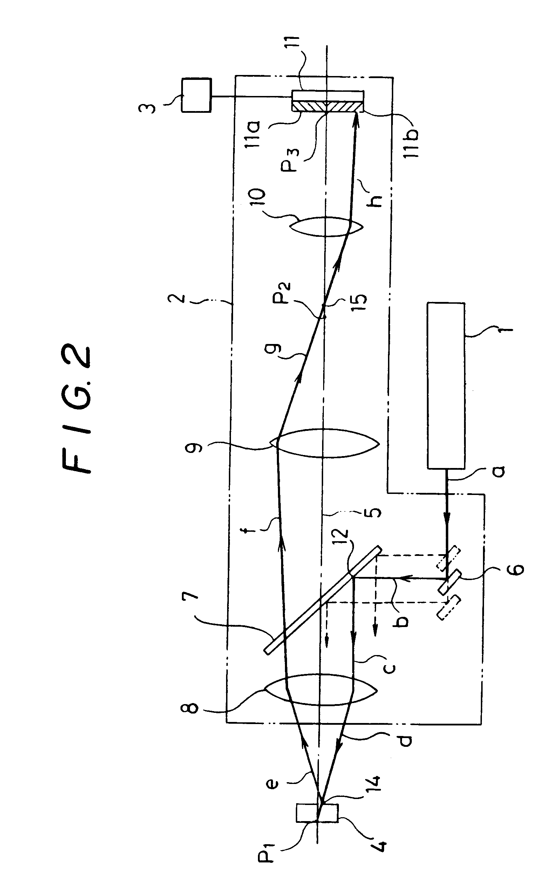

### State of Object Located Closer to Optical System (Refer to Fig. 2):

In the case where the object 4 is shifted towards the optical system 2 and therefore is out of focus, the measuring beam **d** refracted by the objective lens 8 is reflected at the point of reflection 14 on the front surface 4a of the object 4 below the optical axis 5. The beam then goes through the objective lens 8 and the focusing lens 9, through a refocusing point 15 located in a position forward of the aforesaid refocusing position p2, and through the magnifying lens 10 at its peripheral portion to be received by the lower photosensor 11b. Thereupon, the pertinent position signal is delivered to the focusing mechanism 3 to cause the object 4 to move away from the optical system 2, and the operation of the focusing mechanism 3 is stopped when the measuring beam **h** comes to the neutral position p3 between the photosensors 11a, 11b. Thus, the focusing point p1 of the measuring beam **d** comes to coincide with the front surface 4a of the object 4 as in Fig. 1.

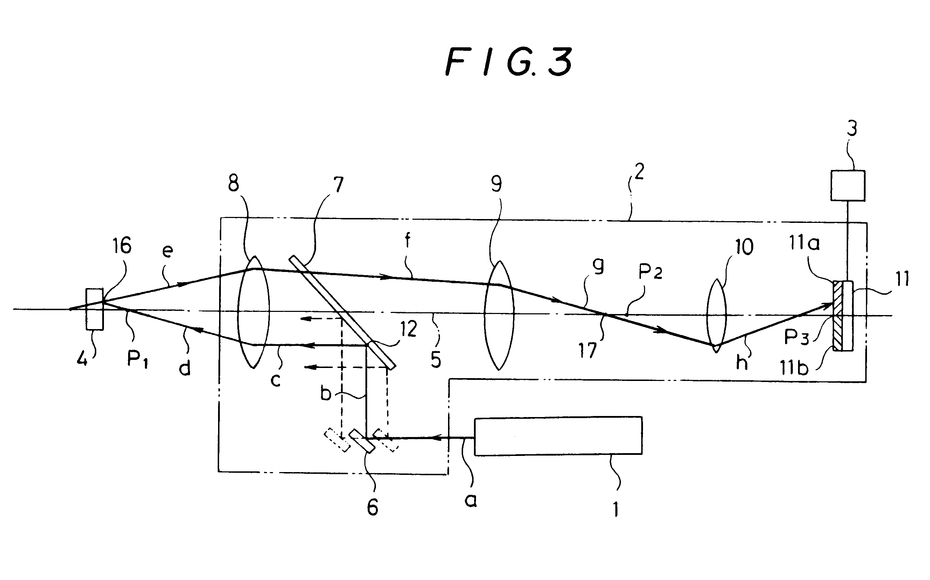

### State of Object Located Farther from Optical System (Refer to Fig. 3)

Conversely, in the case where the object 4 is shifted away from the optical mechanism 2 and the front surface 4a is therefore spaced from the focusing point p1, the measuring beam **d** refracted by the objective lens 8 comes to be reflected at the point of reflection 16 on the front surface 4a of the object 4 above the optical axis 5. The beam then goes through the objective lens 8 and the focusing lens 9, through a refocusing point 17 located rearward of the point P2, and through the magnifying lens 10 to be received by the upper photosensor 11a. Thereupon, the pertinent position signal is delivered to the focusing mechanism 3, so that the focusing mechanism 3 causes the object 4 to move closer to the optical mechanism 2 whereby focusing of the measuring beam **d** as shown in Fig. 1 is achieved.

Thus, even if the object 4 is spaced from the focus, p1, of the objective lens 8, the distance is automatically corrected so that complete coincidence between the focusing point p1 of the measuring beam **d** and the front surface 4a of the object 4 is achieved. Further, even if the object 4 is inclined with respect to the optical axis 5, there is no problem because the light position detector 11 and the focusing mechanism 3 can detect rays of light reflected irregularly from the front surface 4a of the object 4.

Although a half mirror is employed for the fixed mirror 7 in the above described basic arrangement, a dichroic mirror, laser mirror, or other mirror may be used instead. And, although a semiconductor position-sensitive detector (PSD) is employed for the light position detector 11, other types of light position detector such as, for example, a photodiode (PD) may be used so as to obtain similar effects to the above. Further, although a servo mechanism is employed for the focusing mechanism 3, similar effects can be obtained from another mechanism if it has an operating speed similar to that of the servo mechanism. And further, it is possible to dispose a polarization filter at the position just before the light position detector 11 thereby to shield the incident rays of light of the wavelengths in the vicinity of the wavelength (6328 Å) of the polarized He-Ne laser beam thereby to enhance the antinoise property.

By utilization of the above described basic arrangement and its functioning, the following benefits, already mentioned in the applicants previous proposal (Japanese Published Patent Application No. 60-214773), can be obtained:
1. Because of the capability of positioning (distance setting) an object 4, positioning and setting for various parts (objects) in a specific location can be performed correctly and quickly.
2. By executing such positioning (distance setting) as aforesaid for a plurality of points on one part (object) at the same time, inclination (perpendicularity) of the part can be set accurately.
3. By arranging for focusing to be performed by moving the optical system 2 by means of the focusing mechanism 3 and if the objective lens 8 serves as the objective lens of an optical system such as a microscope or telescope, automatic focusing for such optical systems can be achieved.
4. By arranging for focusing to be performed by moving the objective lens 8 and by numeric coding the amount of movement of the objective lens 8 by means of an encoder or the like, it becomes possible to measure the distance between the object 4 and the objective lens 8 (optical system 2) from the numerical value in a noncontacting manner. Such an arrangement can also be applied to noncontact sensors in a three-dimensional measuring instrument or to automatic measurement of a liquid surface level.
5. When a transparent substance is interposed between a reflective object and the objective lens 8, the thickness of the transparent substance can be measured in a noncontacting manner from the amount of movement of the objective lens 8 and the index of refraction of the transparent substance.

The present noncontact automatic focusing apparatus is characterized in that it performs the noncontacting automatic positioning as described above through the suitably adjusted and selected angle of incidence ϑ given by the parallel movement of the movable mirror 6. The following functional benefits can be obtained in addition to the above mentioned basic functional effects:

### Second Embodiment:-

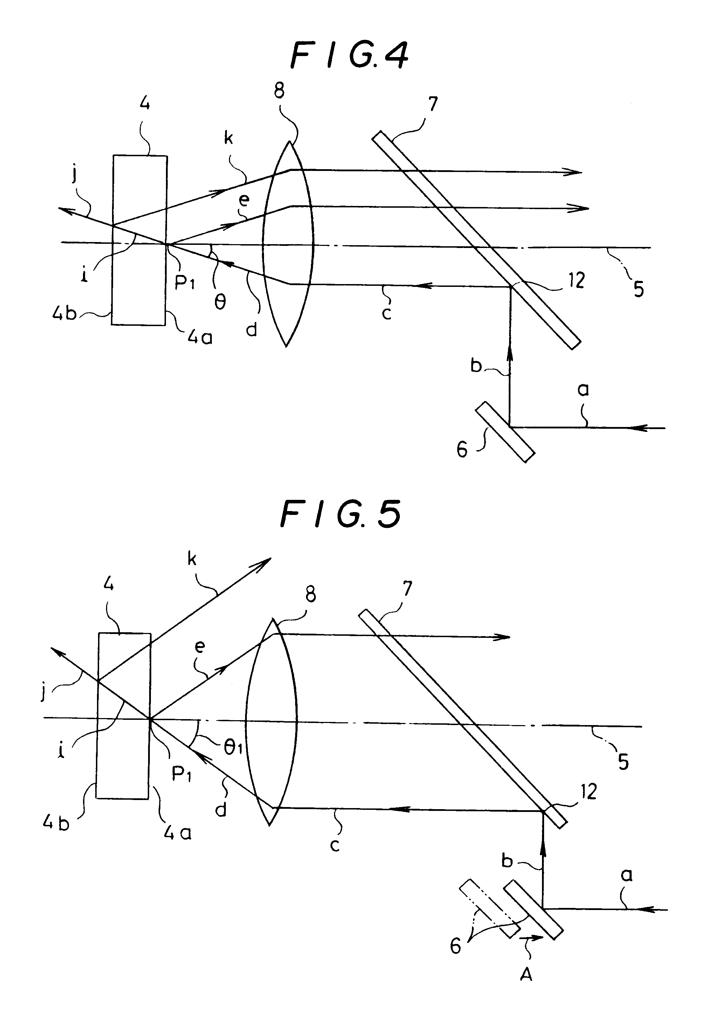

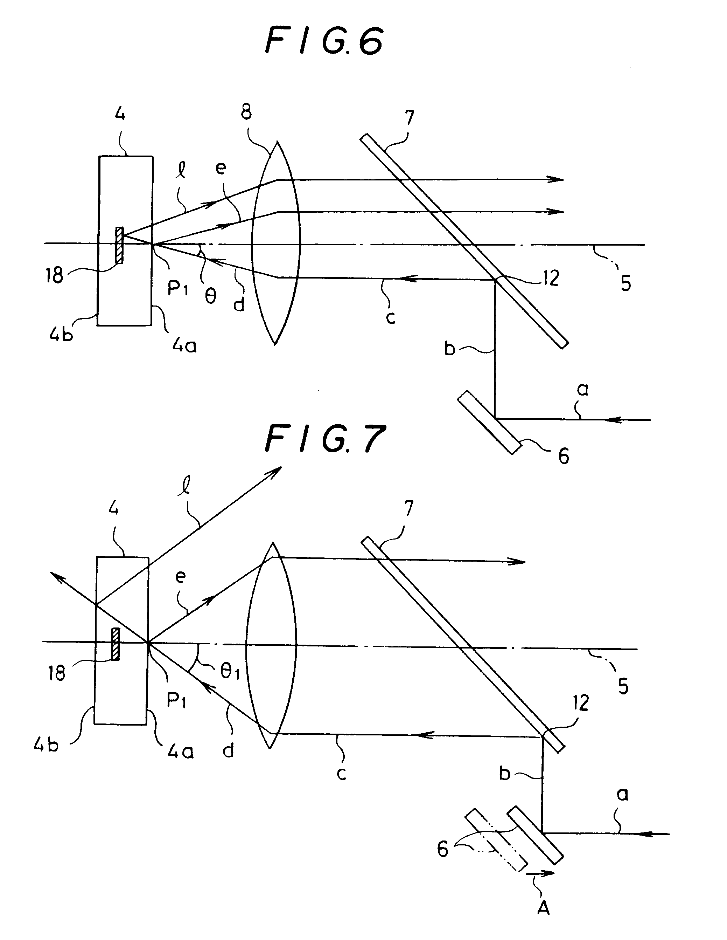

Figs. 4 and 5 are drawings showing a second embodiment of the present invention. Parts corresponding to those in the preceding embodiment are denoted by like reference numerals, and further, the portion in the vicinity of the objective lens 8 of the optical system 2 and the object 4 only is illustrated with other portions being omitted.

The present noncontact automatic focusing apparatus is characterized in that variable setting of the angle of incidence ϑ on the object 4 can be achieved therein suited for positioning (focusing) a transparent body for which optical sensing is relatively difficult. A transparent body as the object 4 produces reflection from both its front surface 4a and its back surface 4b. That is, the measuring beam **d** introduced to the object at an angle of incidence ϑ is split into two portions, i.e., one measuring beam **i** refracted and transmitted into the object 4 and the other measuring beam **e** reflected from the front surface 4a. The measuring beam **i** transmitted into the object 4 is further split into two potions, i.e., one measuring beam **j** penetrating the back surface 4b to the outside and another measuring beam **k** reflected by the back surface 4b. Accordingly, both the measuring beam **e** reflected from the front surface 4a and the measuring beam **k** reflected from the back surface 4b are refracted again by the objective lens 8 and detected by the light position detector 11 (refer to Fig. 4). When the measuring beam **e** from the front surface 4a is the more intense, focusing is based on the front surface 4a, but if the measuring beam **k** from the back surface 4b is the more intense on account of the condition of the back surface 4b, there is a risk that focusing is based on the back surface 4b because the light position detector 11 and the focusing mechanism 3 are then dominated by the measuring beam **k** reflected from the back surface 4b.

In such a case, a good result is obtained by effecting parallel movement of the movable mirror 6 in the direction A away from the object, so that the measuring beam **c** reflected by the fixed mirror 7 may be refracted by the objective lens 8 at a position closer to the periphery, whereby the measuring beam **d** is introduced to the object 4 at a larger angle of incidence ϑ 1. By so doing, the angles of reflection of both the measuring beams **e, k** at the front surface 4a and the back surface 4b are increased, and the measuring beam **k** reflected from the back surface 4b is thereby directed away from the objective lens 8. Therefore, only the measuring beam **e** reflected from the front surface 4a is refracted by the objective lens 8, and thus the focusing mechanism 3 is caused to operate in dependence on this measuring beam **e.** Although the measuring beam **e** from the front surface 4a represents only a small quantity of light because it is reflected from the front surface 4a of the object 4 made from a transparent substance, there arises no problem when it is electrically amplified by the light position detector 11.

The present embodiment, in summary, is adapted to be able to adjust the angle of incidence ϑ of the measuring beam so that the measuring beam **k** reflected from a surface other than the front focusing surface 4a of the object (transparent body) 4 may be reflected in a direction such that it cannot enter the objective lens 8. This embodiment is equally applicable to an object (transparent body) 4 which is provided with an opaque substance or the like at its back surface 4b, either joined thereto or separated therefrom.

### Third Embodiment:-

Figs. 6 and 7 are drawings showing a third embodiment of the present invention. In the present embodiment, the case where a transparent body (object) 4 includes therein an opaque substance 18 will be described. In the present case, the measuring beam **l** reflected from the opaque substance 18 is more intense than the measuring beam **e** reflected from the front surface 4a, and so, the light position detector 11 and the focusing mechanism 3 necessarily perform focusing on the surface of the opaque substance 18 (refer to Fig. 6). Then, the front surface 4a of the transparent body 4, on which focusing is desired, comes out of focus. Even in such a case, the reflection of the measuring beam **d** from the opaque substance 18 can be avoided by parallel movement of the movable mirror 6 in the direction A away from the object, so that the angle of incidence ϑ 1 of the measuring beam **d** is increased (refer to Fig. 7). Thus, it becomes possible to cause the focusing mechanism 3 to operate only in accordance with the measuring beam **e** reflected from the front surface 4a of the transparent body 4 and to achieve the desired focusing on the front surface 4a of the transparent body 4. The present embodiment most suitably employed in such a case where an electronic circuit (semiconductor or the like) is enclosed within a transparent substrate, and is applicable, not only in the case where an opaque substance 18 is located within a transparent body 4, but also in the case where, as described above, an opaque substance 18 or the like is disposed adjacent the back surface 4b of the transparent body 4 joined thereto or separated therefrom, in that focusing only on the front surface 4a of the transparent body 4 can be achieved, as described in the present embodiment, if interference between the opaque substance 18 and the measuring beam **d** (irradiation thereof) is prevented.

### Fourth Embodiment:-

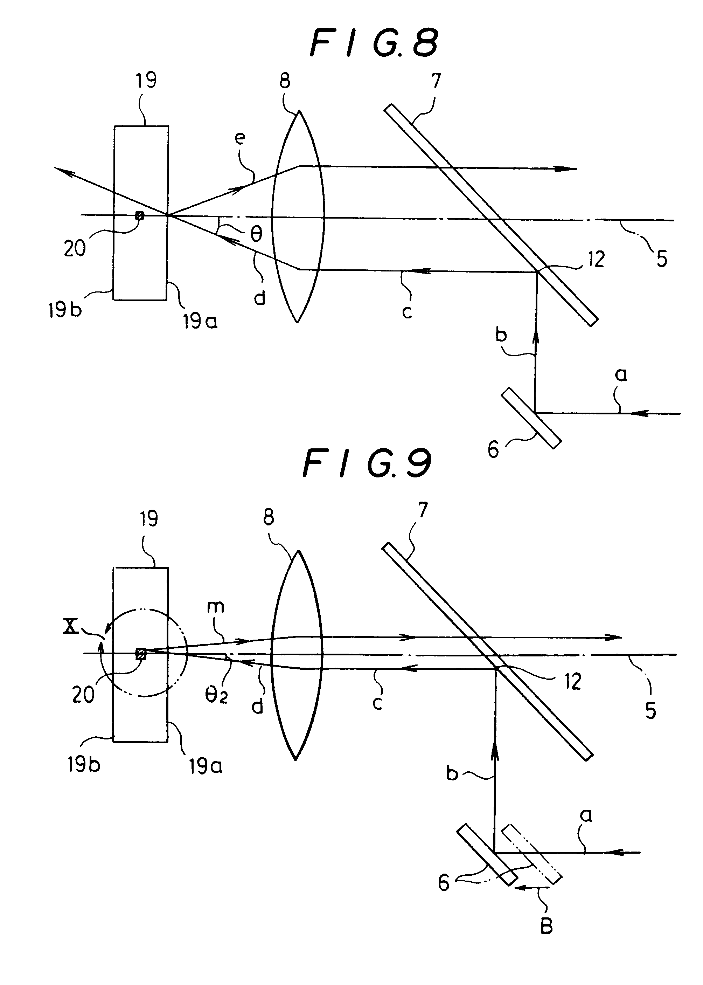

Figs. 8 to 11 show a fourth embodiment of the present invention. In the present embodiment, a small-sized opaque substance 20 is located within a transparent body 19 and focusing on the surface of the small-sized opaque substance 20 is desired. Since the opaque substance 20 is small in size, the measuring beam **d** from the objective lens 8 does not impinge on the same when the angle of incidence ϑ is large, that is when the light position detector 11 and the focusing mechanism 3 are operated in accordance with the measuring beam **e** reflected from the front surface 19a of the transparent body 19 and focusing is made on the front surface 19a of the transparent body 19, so that the desired focusing on the opaque substance 20 cannot be achieved (refer to Fig. 8).

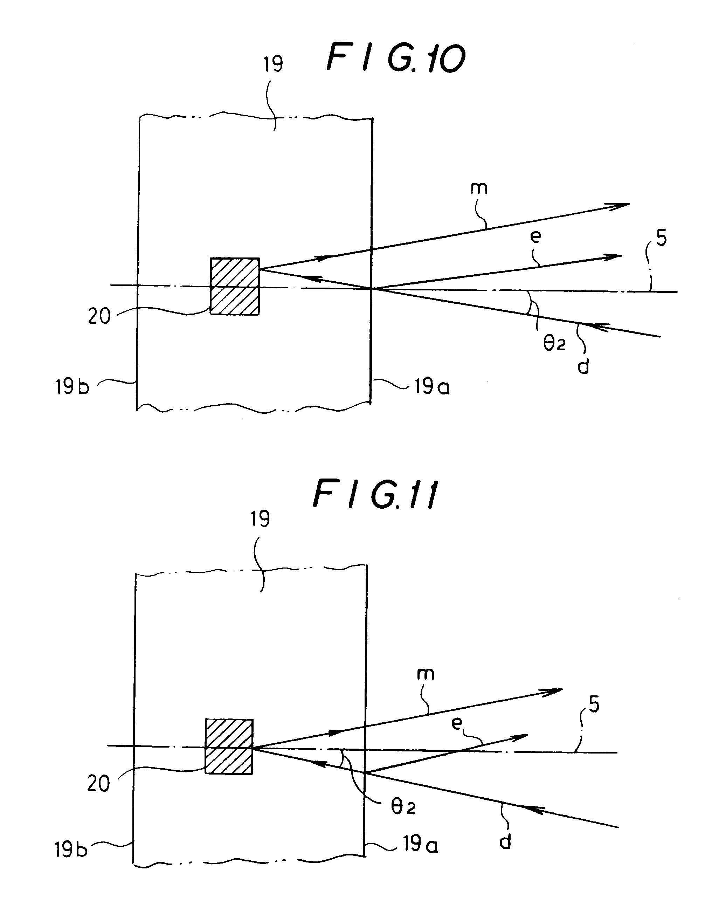

In such a case, by parallel movement of the mirror 6 in a direction B toward the object, the measuring beam **d** is brought closer to the optical axis 5 to irradiate the object at a small angle of incidence ϑ 2 (refer to Fig. 9). Then, since the object is irradiated by the measuring beam **d** brought closer to the optical axis 5, the measuring beam **d** impinges on the opaque substance 20 unless the same is extremely small. Once the measuring beam **d** impinges on the opaque substance 20, since the measuring beam **m** reflected from the opaque substance 20 is more intense than the measuring beam **e** reflected from the front surface 19a of the transparent body 19 (refer to Fig. 10), the light position detector 11 and the focusing mechanism 3 are caused to operate in accordance with the measuring beam **m** reflected from the opaque substance 20 whereby focusing on the surface of the opaque substance 20 is achieved (Refer to Fig. 11). Even if the transparent body 19 is thick, the focusing is smoothly achieved. Therefore, the present embodiment is fit for use in such cases where, as aforementioned, an electronic circuit (semiconductor or the like) is enclosed within a transparent substrate and it is desired to obtain focusing on the electronic circuit, and where the present noncontact automatic focusing apparatus is incorporated in a microscope and it is desired to focus on a specimen which is sandwiched between a slide glass and a cover glass. Further, it is possible to effect focusing not only on an opaque substance 20 within a transparent body 19, but also on an opaque substance 20 or the like disposed, as mentioned in the foregoing, on the side of the back surface 19b of the transparent body 19 joined thereto or separated therefrom.

### Fifth Embodiment:-

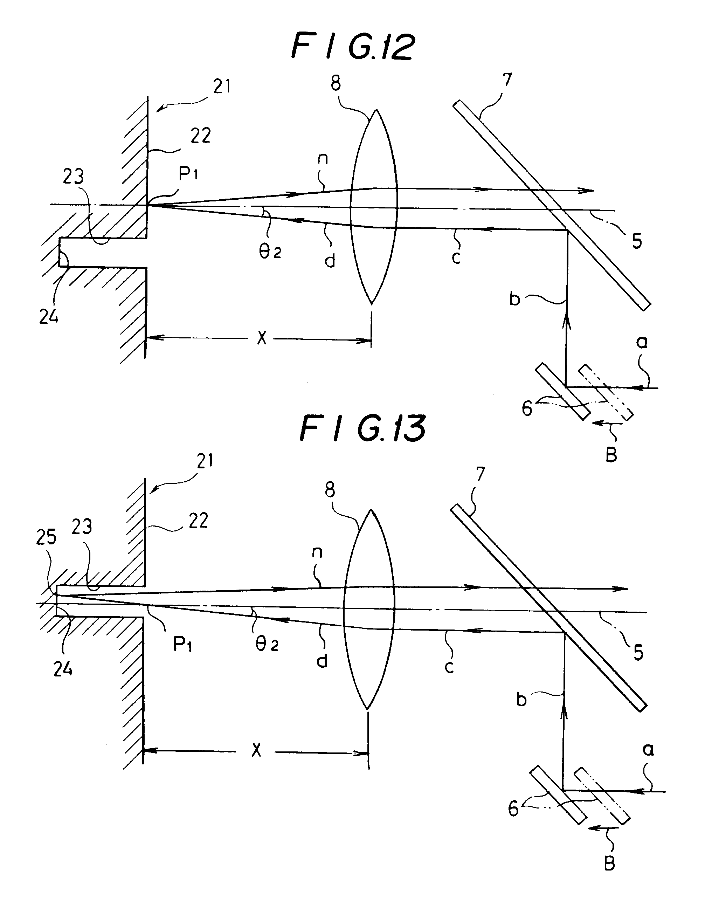

Figs. 12 to 14 are drawings showing a fifth embodiment of the present invention. In the present embodiment, the noncontact automatic focusing apparatus of the present invention is utilized for measurement of a distance in a noncontacting manner. In the surface 22 of the object 21 is a deep hole 23 with a minute diameter. Since this hole 23 is very small in diameter and large in depth, it is difficult to measure its depth with an ordinary measuring instrument. The measurement becomes possible utilizing the noncontact automatic focusing apparatus according to the present invention.

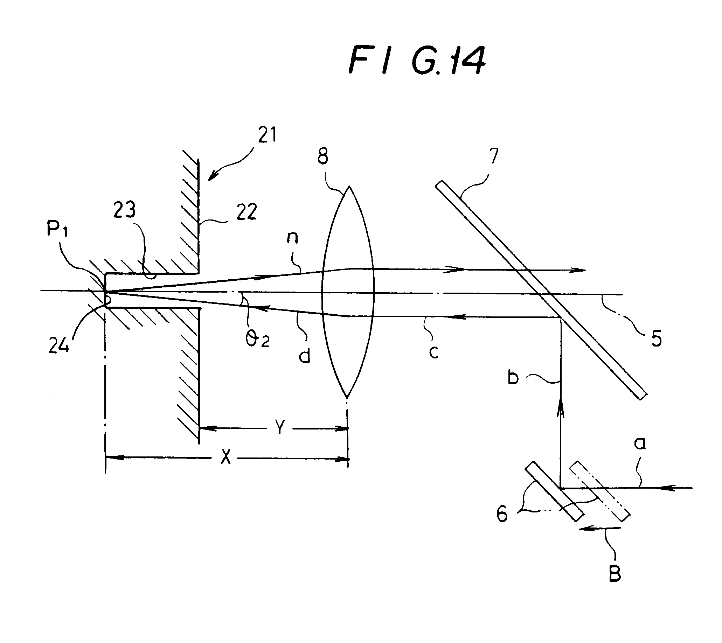

As a first step, by moving the movable mirror 6 in the direction B toward the object, the measuring beam **d** is brought closer to the optical axis 5 to irradiate the surface 22 at a small angle of incidence ϑ 2 thereby to set the focal point p1 thereon. The distance between the surface 22 and the objective lens 8 (optical system 2) this time will be represented by X (refer to Fig. 12). As a second step, the optical system 2 as a whole is given a parallel movement to bring the focal point p1 for the measuring beam **d** to the center of the hole 23. Then, the measuring beam **d** impinges on the bottom 24 of the hole 23 and is reflected therefrom to the objective lens 8 as the measuring beam **n** (refer to Fig. 13). Since the angle of incidence ϑ 2 of the measuring beam **d** is small enough also at this time, the inner walls or others of the hole 23 do not interfere with it, and thus the beam is certainly reflected. Because the point of reflection 25 at the bottom 24 of the hole 23 is off the optical axis 5, the optical system 2 as a whole is moved toward the object 21 by operation of the focusing mechanism 3 until the focal point p1 coincides with the optical axis 5 at the bottom 24 (refer to Fig. 14). If the distance between the surface 22 and the objective lens 8 (optical mechanism 2) this time is represented by Y, the depth of the hole 23 is obtained from X - Y. Or, since the amount of movement of the objective lens 8 (optical system 2) just agrees with the depth of the hole 23, the depth of the hole 23 may also be obtained directly from the amount of the movement as measured by an encoder or the like.

Since the measuring beam **a** is a polarized He-Ne laser beam and the angle of incidence ϑ of the measuring beam **d** can be adjusted to a very small magnitude by parallel movement of the movable mirror 6 as aforesaid, it is possible automatically and in a noncontacting manner to carry out measurement of the depth of a hole 23 with a minute diameter, which has so far been relatively difficult. Even if there is interposed a transparent substance between the hole 23 as the object of measurement and the objective lens 8, the measurement can be smoothly carried out as aforesaid.

The present invention as described so far enables various effects to be achieved as follows:
(a) Even in the case of an object including a transparent body difficult to detect optically, or in case of such a body combined with an opaque substance joined thereto or separated therefrom, focusing can be smoothly achieved with precision in a noncontacting manner either on the front surface of the transparent body or on the surface of the opaque substance by adjusting the angle of incidence of the measuring beam.
(b) Since the angle of incidence can be made small, an object of minute size can be dealt with.
(c) Since a polarized He-Ne laser beam is employed as the measuring beam, the beam is thinner than any other laser beam, and in addition thereto, its convergent spot is very small in size and not divergent. Accordingly, the position detecting in the light position detector can be carried out with high accuracy (high resolution). The diameter of the convergent spot of the polarized He-Ne laser beam is as small as approximately 1 µ -100 µ although it depends on the power of the objective lens, that is, focusing is achieved with high accuracy.

Further, according to the embodiments of the present invention:
(d) Since the shift of the measuring beam is magnified by a magnifying lens, even a minute shift can be accurately enlarged, and since the position is then detected by the light position detector, highly accurate position detection can be achieved. Thus, even under the condition of a large distance between the objective lens and the object whereby the accuracy in the focus detection is liable to be lowered, highly accurate focusing can be achieved, that is, focusing is achieved with high accuracy.
(e) Since the semiconductor position-sensitive detector (PSD) as the light position detector only outputs the center-of-gravity position of the detected spot of the measuring beam, the performance is not affected by a change in the luminance distribution, or more particularly, the accuracy in the focusing is not affected by the luminance distribution (contrast) on the surface of the subject. That is, a high anti-noise property and high reliability in the measurement is provided.
(f) Since a semiconductor position-sensitive detector (PSD) is employed as the light position detector, and a servo mechanism is employed as the focusing mechanism, adjustment of the distance between the optical mechanism and the object can be achieved in as short a time as 10 mm sec on an average, that is, focusing is achieved at a high speed.

## Claims

1. A method for non-contact automatic focusing comprising the steps of:-
- reflecting a polarized He-Ne laser beam emitted in a direction parallel to an optical axis of an optical system by means of a mirror (6), which is movable in a direction parallel to the optical axis and which has an angle of inclination of 45 degrees with respect to the optical axis;
- reflecting the laser beam, reflected from said movable mirror, by means of a fixed mirror (7), which has an angle of inclination of 45 degrees with respect to the optical axis, the distance between the beam reflected by the said fixed mirror and the optical axis being adjusted in accordance with the horizontal position of said movable mirror;
- illuminating an object (4) with the laser beam reflected from said fixed mirror and then re-directed by an objective lens (8) which defines said optical axis, said mirrors being positioned and the laser beam being sufficiently narrow that the laser beam impinges on a local off axis portion of said objective lens, and the angle of incidence of the laser beam with respect to the object being determined by the distance between the laser beam reflected by said fixed mirror and the optical axis;
- receiving the laser beam reflected by the object and then re-directed again by said objective lens by means of a light position detector (11); and
- adjusting the distance between said object and objective lens by focusing means (3) in response to a position signal output from said light position detector such that the laser beam impinges on a predetermined location of the object.

2. A method according to claim 1, wherein the object is a transparent body and wherein said movable mirror is adjusted to cause the laser beam to impinge on a circumferential portion of said objective lens such that the laser beam impinges on the transparent body at a large angle of incidence and light reflected from portions of the transparent body other than the front surface is directed such that it cannot enter said objective lens.

3. A method according to claim 2, wherein said transparent body includes an opaque substance (18) within the same or disposed adjacent to the back surface thereof, and wherein said portions of the transparent body other than the front surface include the surface of the opaque substance.

4. A method according to claim 1, wherein the object is an opaque substance (20) behind a transparent body (19), and wherein said movable mirror is adjusted to cause the laser beam to impinge on a portion close to the centre of said objective lens such that the laser beam impinges on the opaque substance at a small angle of incidence through the transparent body.

5. A method according to claim 4, wherein the opaque substance has a surface size smaller than a surface size of said transparent body and is included therein.

6. A method according to claim 1, wherein the object has a deep narrow hole (23) therein and wherein said movable mirror is adjusted to cause the **laser** beam to impinge on a portion close to the centre of said objective lens such that the laser beam impinges on the bottom surface (24) of the hole at a small angle of incidence.

7. A non-contact automatic focusing apparatus comprising a laser source(1), an optical system (2) and focusing means (3) wherein said laser source emits a polarized He-Ne laser beam in a direction parallel to the optical axis of said optical system (3), said optical system comprising:
- a mirror (6) movable parallel to the optical axis for reflecting the beam emitted from said laser source in a direction at a right angle to the optical axis;
- a fixed mirror (12) for reflecting the laser beam reflected from said movable mirror, in a direction parallel to the optical axis, the distance between the beam reflected by the fixed mirror and the optical axis being adjustable in accordance with the horizontal position of said movable mirror;
- an objective lens (8) defining said optical axis for re-directing said laser beam to an object at an angle of incidence determined by the distance between the laser beam reflected from said fixed mirror and the optical axis and for re-directing again the laser beam reflected from the object, said mirrors being positioned and said laser beam being sufficiently narrow that the laser beam impinges only on a local off-axis portion of said objective lens;
- a focusing lens (19) for re-directing the laser beam reflected from the object and re-directed by the objective lens to a position located on the optical axis; and
- a light position detector (11) for receiving the laser beam passed through said focusing lens, said focusing means comprising means for moving at least one of the object and the objective lens such that the laser beam impinges on a predetermined location of the object.

8. An apparatus according to claim 7, wherein said fixed mirror is a half mirror.

9. An apparatus according to claim 7 or 8, wherein said light position detector is a semiconductor position-sensitive detector.

10. An apparatus according to any of claims 7 to 9, wherein said focusing mechanism includes a servo mechanism.

## Patentansprüche

1. Verfahren zur berührungslosen Fokussierung, welches die folgenden Schritte umfaßt: -
- Reflektieren eines polarisierten He-Ne Laserstrahls, welcher in eine Richtung parallel zur optischen Achse eines optischen Systems emittiert wird, an einer Spiegelvorrichtung (6), die in eine Richtung parallel zur optischen Achse bewegt werden kann und einen Einfallswinkel von 45 Grad bezüglich der optischen Achse aufweist;
- Reflektieren des Laserstrahls, welcher von dem beweglichen Spiegel reflektiert wird, an einer feststehenden Spiegelvorrichtung (7), die einen Einfallswinkel von 45 Grad bezüglich der optischen Achse aufweist, wobei der Abstand zwischen dem Strahl, welcher von dem feststehenden Spiegel reflektiert wird, und der optischen Achse entsprechend der horizontalen Stellung des beweglichen Spiegels eingestellt wird;
- Beleuchten eines Objekts (4) mit dem Laserstrahl, der an dem feststehenden Spiegel reflektiert und dann von einer Objektivlinse (8), welche die optische Achse definiert, umgelenkt wird, wobei die Spiegel so angeordnet sind und der Laserstrahl so eng ist, daß der Laserstrahl auf einen Bereich der Objektivlinse fällt, welcher außerhalb der optischen Achse liegt, und wobei der Einfallswinkel des Laserstrahls bezüglich des Objekts aus dem Abstand zwischen dem Laserstrahl, welcher an dem feststehenden Spiegel reflektiert wird, und der optischen Achse bestimmt wird;
- Empfangen des Laserstrahls, der von dem Objekt reflektiert und dann durch die Objektivlinse umgelenkt wird, durch einen Lichtpositionsdetektor (11); und
- Einstellen des Abstands zwischen dem Objekt und der Objektivlinse durch eine Fokussierungsvorrichtung als Reaktion auf ein Positionsausgangssignal des Lichtpositionsdetektors, so daß der Laserstrahl auf eine vorbestimmte Stelle des Objekts fällt.

2. Verfahren nach Anspruch 1, wobei das Objekt ein transparenter Körper ist und wobei, um den Laserstrahl auf einen Bereich, welcher am Rand der Objektivlinse liegt, einfallen zu lassen, der bewegliche Spiegel so eingestellt wird, daß der Laserstrahl unter einem großen Einfallswinkel auf den transparenten Körper fällt und Licht, welches von anderen Bereichen des transparenten Körpers als von der Vorderseite reflektiert wird, so gerichtet wird, daß es nicht in die Objektivlinse eintreten kann.

3. Verfahren nach Anspruch 2, wobei der transparente Körper eine undurchsichtige Substanz (18) enthält, welche darin angeordnet oder mit dessen Rückseite verbunden ist, und wobei die von der Frontseite abweichenden Bereiche des transparenten Körpers die Oberfläche der undurchsichtigen Substanz umfassen.

4. Verfahren nach Anspruch 1, wobei das Objekt eine undurchsichtige Substanz (20) hinter einem transparenten Körper (19) ist, und wobei, um den Laserstrahl auf einen Bereich, welcher dicht am Zentrum der Objektivlinse liegt, einfallen zu lassen, der bewegliche Spiegel so eingestellt ist, daß der Laserstrahl unter einem kleinen Einfallswinkel durch den transparenten Körper hindurch auf die undurchsichtige Substanz fällt.

5. Verfahren nach Anspruch 4, wobei die undurchsichtige Substanz eine Oberfläche aufweist, welche kleiner ist als jene des transparenten Körpers und in diesem eingeschlossen ist.

6. Verfahren nach Anspruch 1, wobei das Objekt ein tiefes schmales Loch (23) darin aufweist und wobei, um den Laserstrahl auf einen Bereich, welcher dicht am Zentrum der Objektivlinse liegt, einfallen zu lassen, der bewegliche Spiegel so eingestellt ist, daß der Laserstrahl unter einem kleinen Einfallswinkel auf die Grundfläche (24) des Lochs einfällt.

7. Berührungslose automatische Fokussierungs Vorrichtung, welche eine Laserquelle (1), ein optisches System (2) und eine Fokussierungsvorrichtung (3) umfaßt, wobei die Laserquelle einen polarisierten He-Ne Laserstrahl in eine Richtung parallel zur opischen Achse des optischen Systems (3) emittiert, wobei das optische System umfaßt:
- einen Spiegel (6), der parallel zur optischen Achse bewegt werden kann, um den von der Laserquelle emittierten Strahl in eine Richtung senkrecht zur optischen Achse zu reflektieren.
- einen feststehenden Spiegel (12), um den Laserstrahl, welcher von dem beweglichen Spiegel reflektiert wird, in eine Richtung parallel zur optischen Achse zu reflektieren, wobei der Abstand zwischen dem Strahl, der von dem feststehenden Spiegel reflektiert wird, und der optischen Achse entsprechend der horizontalen Stellung des beweglichen Spiegels eingestellt wird;
- eine Objektivlinse (8), welche die optische Achse definiert, zur Umlenkung des Laserstrahls auf ein Objekt unter einem Einfallswinkel, der aus dem Abstand zwischen dem Laserstrahl, welcher von dem feststehenden Spiegel reflektiert wird, und der optischen Achse bestimmt wird, wobei zur erneuten Umlenkung des Laserstrahls, der von den Objekten reflektiert wird, die Spiegel so angeordnet sind und der Laserstrahl so eng ist, daß der Laserstrahl nur auf einen Bereich der Objektivlinse fällt, welcher außerhalb der optischen Achse liegt;
- eine Fokussierungslinse (19) zur Umlenkung des Laserstrahls, welcher von dem Objekt reflektiert und von der Objektivlinse auf eine Stelle umgelenkt wird, die auf der optischen Achse angeordnet ist; und
- einen Lichtpositionsdetektor (11) zum Empfangen des Laserstrahls, welcher durch die Fokussierungslinse hindurch geht, wobei die Fokussierungsvorrichtung eine Vorrichtung umfaßt, um wenigstens das Objekt oder die Objektivlinse so zu bewegen, daß der Laserstrahl auf eine vorbestimmte Stelle des Objekts fällt.

8. Vorrichtung nach Anspruch 7, wobei der feststehende Spiegel ein Halbspiegel ist.

9. Vorrichtung nach Anspruch 7 oder 8, wobei der Lichtpositionsdetektor ein ortsempfindlicher Halbleiterdetektor ist.

10. Vorrichtung nach einem der Ansprüche 7 bis 9, wobei die Fokussierungsmechanik einen Servomechanismus umfaßt.

## Revendications

1. Procédé de mise au point automatique sans contact comprenant les étapes suivante :
- la réflexion d'un faisceau laser He-Ne polarisé émis selon une direction parallèle à un axe optique d'un système optique au moyen d'un miroir (6), qui est mobile dans une direction parallèle à l'axe optique et qui fait un angle d'inclinaison de 45° par rapport à l'axe optique ;
- la réflexion dudit faisceau laser réfléchi depuis ledit miroir mobile, au moyen d'un miroir fixe (7), qui a un angle d'inclinaison de 45° par rapport à l'axe optique, la distance entre le faisceau réfléchi par ledit miroir fixe et l'axe optique étant réglée selon la position horizontale dudit miroir mobile ;
- l'illumination d'un objet (4) avec ledit faisceau laser réfléchi depuis ledit miroir fixe et ensuite redirigé par une lentille d'objectif (8) qui définit ledit axe optique, lesdits miroirs étant positionnés et ledit faisceau laser étant suffisamment étroit pour que le faisceau laser vienne frapper une partie locale décalée de l'axe de ladite lentille d'objectif, et l'angle d'incidence du faisceau laser par rapport à l'objet étant déterminé par la distance entre le faisceau laser réfléchi par ledit miroir fixe et l'axe optique ;
- la réception du faisceau laser réfléchi par l'objet et ensuite redirigé par ladite lentille d'objectif au moyen d'un détecteur de position de lumière
- le réglage de la distance entre ledit objet et ladite lentille d'objectif par des moyens de mise au point (3) en réponse à une entrée de signal de position provenant dudit détecteur de position de lumière de telle façon que le faisceau laser vient heurter un emplacement prédéterminé de l'objet.

2. Procédé selon la revendication 1, dans lequel l'objet est un corps transparent et dans lequel ledit miroir mobile est réglé pour faire que le faisceau laser vienne heurter une partie circonférencielle de ladite lentille d'objectif de façon que le faisceau laser heurte le corps transparent avec un grand angle d'incidence et que la lumière réfléchie par des parties du corps transparent autres que la surface frontale soit dirigée de telle sorte qu'elle ne puisse entrer dans ladite lentille d'objectif.

3. Procédé selon la revendication 2, dans lequel ledit corps transparent comporte une substance opaque (18) à l'intérieur de celui-ci, ou disposée au voisinage de la surface arrière de celui-ci, et dans lequel lesdites parties du corps transparent autres que la surface frontale comprennent la surface de la substance opaque.

4. Procédé selon la revendication 1, dans lequel l'objet est une substance opaque (20) derrière un corps transparent (19), et dans lequel ledit miroir mobile est réglé pour faire que le faisceau laser heurte une partie proche du centre de ladite lentille d'objectif de telle sorte que le faisceau laser heurte ladite substance opaque avec un petit angle d'incidence au travers du corps transparent.

5. Procédé selon la revendication 4, dans lequel la substance opaque a une taille superficielle plus petite que la taille superficielle dudit corps transparent et en ce qu'elle y est incluse.

6. Procédé selon la revendication 1, dans lequel l'objet a un trou étroit et profond (23) et en ce que ledit miroir mobile est réglé pour faire que le faisceau laser heurte une partie proche du centre de ladite lentille d'objectif de telle sorte que le faisceau laser heurte la surface arrière (24) du trou avec un petit angle d'incidence.

7. Appareil de mise au point automatique sans contact comprenant une source laser (1), un système optique (2) et des moyens de mise au point (3), dans lequel ladite source laser émet un faisceau laser He-Ne polarisé dans une direction parallèle à l'axe optique dudit système optique (3), ledit système optique comprenant :
- un miroir (6) mobile parallèlement à l'axe optique pour réfléchir le faisceau émis depuis ladite source laser selon un direction à angle droit par rapport à l'axe optique ;
- un miroir fixe (12) pour réfléchir le faisceau laser réfléchi depuis ledit miroir mobile, dans une direction parallèle audit axe optique, la distance entre le faisceau réfléchi par le miroir fixe et l'axe optique étant réglable selon la position horizontale dudit miroir mobile ;
- une lentille d'objectif (8) définissant ledit axe optique pour rediriger ledit faisceau laser vers un objet avec un angle d'incidence déterminé par la distance entre le faisceau laser réfléchi depuis ledit miroir fixe et l'axe optique et pour rediriger le faisceau laser réfléchi depuis l'objet, lesdits miroirs étant positionnés et ledit faisceau laser étant suffisamment étroit pour que le faisceau laser n'heurte qu'une partie locale décalée de l'axe de ladite lentille d'objectif ;
- une lentille de mise au point (19) pour rediriger le faisceau laser réfléchi depuis l'objet et redirigé par la lentille d'objectif vers une position située sur l'axe optique ;
- un détecteur de position de lumière (11) pour recevoir le faisceau laser qui est passé au travers de ladite lentille de mise au point, ladite lentille de mise au point comprenant des moyens pour déplacer l'objet ou la lentille d'objectif ou les deux de telle sorte que le faisceau laser heurte un emplacement prédéterminé de l'objet.

8. Appareil selon la revendication 7, dans lequel ledit miroir fixe est un demi miroir.

9. Appareil selon la revendication 7 ou 8, dans lequel ledit détecteur de position de lumière est un détecteur à semi-conducteur sensible aux positions.

10. Appareil selon l'une quelconque des revendications 7 à 9, dans lequel le mécanisme de mise au point comprend un servo mécanisme.
